**Europäisches Patentamt**

(19) **European Patent Office**

**Office européen des brevets**

(11) Publication number : **0 333 622 B1**

## (12) EUROPEAN PATENT SPECIFICATION

(45) Date of publication of patent specification :
26.08.92 Bulletin 92/35

(51) Int. Cl.⁵ : **B65D 3/20,** B65B 51/06,
B31B 17/00

(21) Application number : **89500031.3**

(22) Date of filing : **14.03.89**

(54) **A method for making and closing a dispensing mouth for a tubular dispensing container.**

(30) Priority : **18.03.88 ES 8800812**

(43) Date of publication of application :
**20.09.89 Bulletin 89/38**

(45) Publication of the grant of the patent :
**26.08.92 Bulletin 92/35**

(84) Designated Contracting States :
**AT BE CH DE FR GB GR IT LI NL SE**

(56) References cited :
**DE-A- 3 024 407**
**FR-A- 1 359 243**
**GB-A- 921 104**
**US-A- 3 924 795**

(73) Proprietor : **March Vila, Fatima**
**Paseo Sant Joan, 32**
**E-08010 Barcelona (ES)**

(72) Inventor : **March Vila, Fatima**
**Paseo Sant Joan, 32**
**E-08010 Barcelona (ES)**

(74) Representative : **Ponti Grau, Ignasi**
**Paseo de Gracia, 33**
**E-08007 Barcelona (ES)**

# Description

The present invention relates to an essentially simplified method for finishing and closing tubular dispensing containers, of the kind of containers which are formed of a lamination of a flexible material wound in a tubular fashion with overlapped and adhered borders, with a conventional bottom and a mouth defined by two arcuate and concave folding lines, also defining respective diametrically opposed flaps which are overlapped when they are folded.

The invention is essentially applicable to containers provided with an inner impervious plastics film and adapted to contain liquid materials or products (milk, beverages, oil and the like) and, therefore, must have an absolute tightness warranty in its closure.

## BACKGROUND OF THE INVENTION

Containers for liquid substances of the above features are already known, wherein the closing is effected by locating, on the inner surface of the mouth, a piece which has been trimmed with the same outline as the closure zone of the container, with the purpose of affording a total tightness at the zone where closure, i. e., superimposition of the borders of the respective flaps, takes place.

Fitting of a piece with the above outline renders the closing operation cumbersome, because of the difficulty arising from the perfect fitting of the piece within the container, thus giving raise to irregularities in the closure and to the outcome of many containers being discarded.

On the other side, the mere superimposition of the inner, plastics-film carrying surfaces of the container has proved to be not enough to overcome the problem, such that the sealing operation not always is obtained with satisfactory result.

FR-A-1 359 243 discloses a sealing junction for a polythene-coated paper container, which is formed by thermosealing one end of the paper sheet forming the container with the other end, one of said ends being previously folded, so as to avoid contact of the paper with the liquid within the container.

DE-A-3 024 407 discloses a method for forming a tubular dispensing container of the kind which are formed of a lamination of flexible material wound in a tubular fashion with overlapped and adhered borders, in which the sealing of the junction zone of the two borders is made by means of the adhesion of a tape, covering only a restricted width zone along the slit formed between the borders.

## DESCRIPTION OF THE INVENTION

The method making the subject of the invention aims to solve the above drawbacks and affords a sealing system which, making use of the same means as operated today to this end, allows the manufacture of a thoroughly impervious closure of the containers, thus improving the inner finishing of the inside of the same. The inside of the container is thus thoroughly conditioned, with no chance for leakage.

According to the invention, a method for forming and closing a dispensing mouth for a tubular dispensing container, of the kind which are formed of a lamination of flexible material wound in a tubular fashion with overlapped and adhered borders, with a conventional bottom and a mouth defined by two arcuate and concave folding lines defining respective opposite flaps closing the container when they are folded, and in which the sealing of the junction zone of the two borders of said flaps is made by means of the adhesion of a tape covering only a restricted width zone along the slit formed between the borders, is characterised in that the sealing action with the superimposed borders of the sealing flaps of the container is completed by folding one of the borders over itself, on its outer, non plasticized face, and afterwards adhering the plasticized or impervious faces of both borders, the tightness being completed with the arrangement of the sealing tape.

This method improves the tightness of the joint between the two sealing flaps.

To advantage, a longitudinal score line is previously formed parallel to the border of the closing flap, with the purpose of enhancing plying of the said border and to prevent a thickening of closing zone. The ends resulting from joining the two closing flaps with the container walls, are truncated and adhered with one another in an impervious fashion by the same thermosealing method, a score line being formed under at least one of the said ends, to facilitate tearing by hand and the corresponding opening of the container.

## BRIEF DESCRIPTION OF THE DRAWINGS

For a better understanding of the above exposition, the invention will now be described with reference to the Figures of the enclosed drawings preferred embodiments of the method, only by way of non restrictive example. In the said drawings:

Figure 1 shows a section view of a counter-form used for fitting the sealing tape, in the phase of placing the said tape;

Figure 2 corresponds to a known container, and is a cross section of the closing flaps of the container, in juxtaposed relation with the tight sealing tape;

Figure 3 is also a known container, in a view similar to the previous one, in the case of superimposing the borders of the sealing flaps;

Figures 4 and 5 show two cross sections of the mouth according to the invention, in the closing stages with the borders in superimposed relation, before and after the folding of one of said borders over itself;
and Figure 6 is an isometric view, part in section, of a container after being closed according to the method making the subject of the invention.

## DESCRIPTION OF PREFERRED EMBODIMENTS

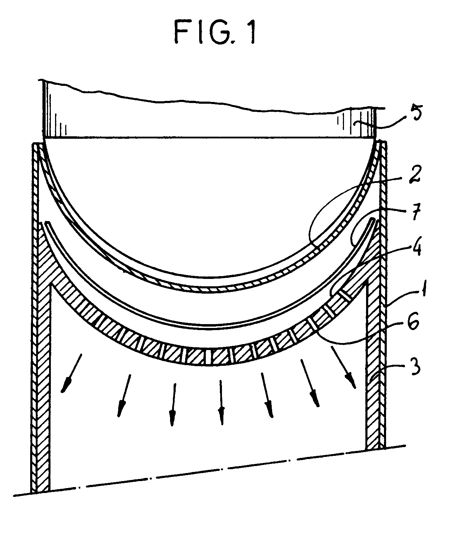

According with the showing of the drawings and as it may be seen in Figure 1, in the inside of a tubular container 1 of the kind as specified in the introduction, with the closing flaps 2 folded down, a counter-form 3 is inserted, in order to press the ensemble of the closure of which the said flaps 2 form part, up to a form 5 supported by whatever conventional means (no shown) as indicated at the upper part of Figure 1.

The counter-form is constituted of a hollow body the working end 4 of which has a concave shape mating with the shape assumed by the flaps 2 and with the shape of the corresponding form, the ensemble resting onto this form in order to make the seal.

The surface of the end 4 has small orifices 6 communicating with the inside of the counter-form 1, in turn connected to a vacuum system to give raise to a suction through the orifices 6, by means of which a piece of tape 7 will be held onto that surface and applied under pressure onto the zone in which the flaps 2 join with one another, the tape being strongly adhered onto the said jointed flaps under whatever appropriate system, preferably under thermal adhesion, either because the tape is formed of a suitable plastics or thermosealing material, or because the said tape has its application face covered by a material of such properties.

As it will be understood, the arrangement of the tape 7 entails no problem, in that it needs not to adapt itself to the mouth inner shape or outline as in the hitherto methods. It is thus a simple matter, starting from a bobbin or the like, to automatically supply the tape piece 7 corresponding to the counter-form 3, and apply it at once, as above described.

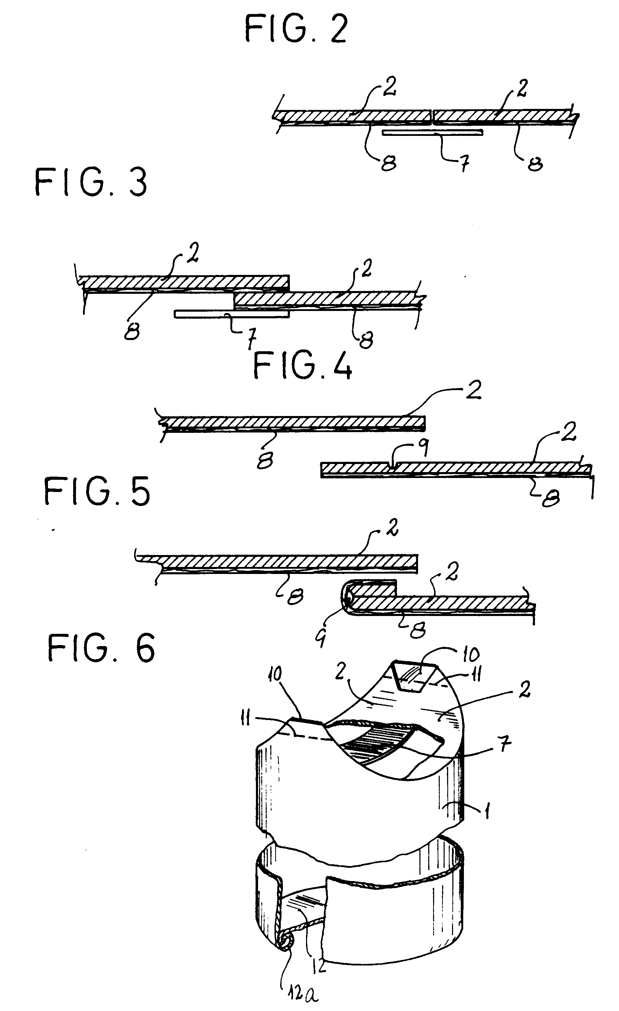

The arrangement of the flap borders may assume whatever embodiment according to the needs in every specific case. Figure 2 shows, thus, the borders of the flaps 2 in a juxtaposed relation and covered, at the container inner face which is provided with the plasticized or impervious layer 8, with the tape 7 having the suitable properties. While this simple embodiment makes it possible to obtain an acceptable sealing and tightness, it can be further improved with the use of the embodiment shown in Figure 3, according to which the borders of the flaps 2 are overlapped to a given extent, such that the plasticized or impervious layer or film 8 itself can provide the imperviousness upon being adhered onto the opposite flap. However, the presence of the tape will warrant an absolute tightness of the closing zone, because it completely covers and seals, as in the previous embodiment, the junction zone or line between the flaps, which at some time could form a leakage crack.

Figures 4 and 5 show a form of embodiment of the closure which is specially advantageous to ensure an absolute tightness of the zone of junction of the closing flaps. According to this embodiment, the borders of the flaps 2 are mutually overlapped as in the embodiment of Figure 3, though one of the flaps has been bent over its outer face, previous to the overlapping, by practicing a score line 9 near the edge of the corresponding border with a view of facilitating the folding and preventing the thickening of the said zone. As it may be seen in Figure 5 it is thus attained that the plasticized films or layers 8 of both flaps come in contact when these latter are joined and become bonded to a single body when the thermosealing is performed. The closure can, eventually, be also completed by fitting the sealing tape 7 according to the invention.

The closure may be completed by adhering, under the same thermosealing system, the resulting truncated ends 10 of the mouth that will have been welded in the closing operation between the form 5 and the counter-form 3 and that can be trimmed to form a spout for the container contents. To facilitate this latter operation, it is foreseen under the end 10, either in one or both the said ends, a scored line 11 facilitating tearing off, with no need for recourse being had to any cutting tool.

This arrangement of the truncated ends 10 has the advantage of affording, previous to the total sealing of the container, an aperture of dimensions enough for filling the container, for example by means of a suitable nozzle, and which can be finally closed afterwards in a simple thermosealing operation.

At any rate, the bottom of the container 1 can be closed by the conventional systems, such as that shown in Figure 6 and comprising the arrangenemt of a lid 12, the borders of which are fastened by the inwards directed flanging 12a of the body walls of the container 1.

The folding of the border of one flap, and the fact of taking advantage of the contact of the plasticized faces for thermosealing the junction zones of the said flaps, with the further embodying of the sealing tape, make it possible to absolutely warrant the tightness of the joint, a result which is difficult to attain with the systems hitherto used.

## Claims

1. A method for forming and closing a dispensing mouth for a tubular dispensing container (1), of the kind which are formed of a lamination of flexible material wound in a tubular fashion with overlapped and adhered borders, with a conventional bottom (12) and a mouth defined by two arcuate and concave folding lines defining respective opposite flaps (2) closing the container when they are folded, and in which the sealing of the junction zone of the two borders of said flaps (2) is made by means of the adhesion of a tape (7) covering only a restricted width zone along the slit formed between the borders, <u>characterised</u> in that the sealing action with the superimposed borders of the sealing flaps (2) of the container is completed by folding one of the borders over itself, on its outer, non plasticized face, and afterwards adhering the plasticized or impervious faces of both borders, the tightness being completed with the arrangement of the sealing tape.

2. A method according to claim 1, characterised in that a longitudinal score line (9) is previously formed parallel to the border of the closing flap (2), with the purpose of enhancing plying of the said border and to prevent a thickening of the closing zone.

3. A method according to claims 1 or 2, characterised in that the ends (10) resulting from joining the two closing flaps (2) with the container walls, are truncated and adhered with one another in an impervious fashion by the same thermosealing method, a score line (11) being formed under at least one of said ends, to facilitate tearing by hand and the corresponding opening of the container.

**Patentansprüche**

1. Verfahren zum Formen und Verschließen einer Ausgießöffnung eines rohrförmigen Behälters (1), der aus einer Schicht flexiblen Materials gebildet ist, welches rohrförmig mit überlappenden und verklebten Kanten gewickelt ist, mit einem gewöhnlichen Boden (12) und einer durch zwei bogenförmige und konkave Faltlinien gebildeten Öffnung, die jeweils gegenüberliegende Klappen (2) festlegt, die den Behälter verschließen, wenn sie gefaltet sind, und bei welchen die Abdichtung der Verbindungszone der zwei Kanten der Klappen (2) durch Verklebung mit einem Klebeband (7) erfolgt, das nur einen begrenzten Breitenbereich längs des Spaltes, der durch die Kanten gebildet ist, bedeckt, dadurch gekennzeichnet daß die Abdichtung mit den übereinanderliegenden Kanten der Verschließkappen (2) des Behälters erfolgt durch Umfalten einer Kante auf sich selbst, auf ihre äußere, nicht plastifizierte Seite und durch nachfolgendes Verkleben der plastifizierten oder undurchlässigen Flächen der beiden Kanten und daß die Dichtheit letztendlich durch die Anordnung des Abdichtbandes erreicht wird.

2. Verfahren nach Anspruch 1, dadurch gekennzeichnet, daß eine längliche Kerblinie (9) vorher parallel zu der Kante der Verschlußklappe (2) ausgeformt wird, um die Faltung der Kante zu verbessern und eine Verdickung der Verschlußzone zu verhindern.

3. Verfahren nach Anspruch 1 oder 2, dadurch gekennzeichnet, daß die durch die Verbindung der zwei Verschlußklappen (2) mit den Behälterwänden entstehenden Enden (10) abgeknickt und mit sich selbst undurchlässig durch dasselbe Thermoabdichtverfahren verklebt werden, und daß unter mindestens einem der Enden eine Kerblinie (11) ausgebildet wird, um das Abreißen von Hand und das entsprechende Öffnen des Behälters zu erleichtern.

**Revendications**

1. Procédé de mise en forme et de fermeture d'une embouchure de distribution d'un récipient tubulaire (1) de distribution, du type qui est formé d'un stratifié d'un matériau souple enroulé sous forme tubulaire avec des bords qui se recouvrent et qui sont collés, avec un fond classique (12) et une embouchure délimitée par deux lignes courbes et concaves de pliage délimitant des volets opposés respectifs (2) fermant le récipient lorsqu'ils sont pliés, et dans lequel le scellement de la zone de jonction des deux bords des volets (2) est réalisé par collage d'un ruban (7) qui recouvre uniquement une zone de largeur limitée le long de la fente formée entre les bords, caractérisé en ce que l'action de scellement avec les bords superposés des volets de scellement (2) du récipient est réalisée par pliage de l'un des bords sur lui-même, sur sa face externe non plastifiée, puis par adhérence des faces plastifiées ou imperméables des deux bords, l'étanchéité étant complétée par la disposition du ruban d'étanchéité.

2. Procédé selon la revendication 1, caractérisé en ce qu'une ligne longitudinale d'entaille (9) est formée préalablement en direction parallèle au bord du volet de fermeture (2), afin qu'elle améliore la courbure du bord et empêche un épaississement de la zone de fermeture.

3. Procédé selon la revendication 1 ou 2, caractérisé en ce que les extrémités (10) résultant du raccordement des deux volets de fermeture (2) avec les parois du récipient sont tronquées et collées mutuellement de manière imperméable par le même procédé de thermosoudage, une ligne d'entaille (11) étant formée sous l'une au moins des extrémités afin que la déchirure à la main et l'ouverture correspondante du récipient soient facilitées.

## FIG. 1

EP 0 333 622 B1

FIG. 2

FIG. 3

FIG. 4

FIG. 5

FIG. 6